# EUROPEAN PATENT APPLICATION

(11) **EP 1 062 863 A1**
(43) Date of publication of application: **27.12.2000**
(21) Application number: 00202176.4
(22) Date of filing: 22.06.2000
(51) Int. Cl.: A01G 1/02

(54) **Device and method for working at least one foil-covered asparagus bed**

(30) Priority: 25.06.1999 NL 1012442
(71) Applicant: Engels, Franciscus Maria, 5988 NS HELDEN (NL)
(72) Inventor: Engels, Franciscus Maria, 5988 NS HELDEN (NL)
(74) Representative: Veldman-Dijkers, Cornelia G.C., Ir.

(57) **Abstract**

A device and a method suitable for working foil-covered asparagus beds (31), which device comprises a motor-driven vehicle (3) supported by at least three wheels (5,29) as well as means (2) for lifting, guiding and laying down the foil. A first wheel (5) is positioned between two asparagus beds (31) lying adjacently to each other during operation, whilst a second and a third wheel (29) are positioned on sides of the two asparagus beds (31) facing away from each other.

## Description

The invention relates to a device suitable for working foil-covered asparagus beds, which device comprises a motor-driven vehicle supported by at least three wheels as well as means for lifting, guiding and laying down the foil.

The invention furthermore relates to a method for working foil-covered asparagus beds.

Asparagus is grown in elongated beds. These beds are elevated with respect to the ground surface and they form elongated ribs, as it were. Asparagus must be harvested just before or as soon as it rises above the surface of the asparagus beds. The moment an asparagus rises above the bed, it must be harvested as soon as possible in order to prevent it from colouring. It is known to cover the asparagus beds with a foil, preferably a dark foil, so that the asparagus will not be exposed to the sunlight upon reaching the surface of the asparagus bed. When there is sunlight, a higher temperature of the asparagus bed is moreover obtained by using the dark foil, which stimulates the growth of the asparagus. One drawback of using a foil is the fact that it must be removed temporarily for harvesting the asparagus. After the asparagus that is present under the foil has been harvested, the foil must be placed back on the asparagus bed again, so asparagus which is still present in the ground can continue to grow and can be screened from the daylight.

With the prior art devices the foil is positioned over the device at the beginning of an asparagus bed. Then the device is moved along the asparagus bed, whereby the foil that is present near the rear side of the vehicle is placed back on the asparagus bed again, whilst the foil that is present near the front side is lifted. Between said front side and said rear side the foil is lifted from the asparagus bed, thus making it possible to work the asparagus bed. In many cases the long sides of the foil are weighted, for example with sand, so as to make it easier to place the foil back on the asparagus bed again. Said weighting of the long sides also prevents the foil from being blown off the asparagus bed.

The devices that are known per se comprise relatively complicated mechanisms for lifting, guiding and placing back the foil on the asparagus bed again.

Thus, EP-A1-0 922 382 discloses a device comprising four wheels, two of which are present on one side of an asparagus bed during operation, whilst the other two wheels are present on another side of the asparagus bed. A foil can be lifted off a single asparagus bed by means of said device. Once the end of the asparagus bed is reached, the device must be turned and be positioned over an adjacent asparagus bed. Since the device comprises two pairs of wheels, its manoeuvrability is relatively limited, however.

The object of the invention is to provide a device by means of which two beds lying adjacently to each other can be worked simultaneously in a simple manner, whilst in addition the manoeuvrability of the device is considerably improved.

This objective is accomplished with the device according to the invention in that a first wheel is positioned between two asparagus beds lying adjacently to each other during operation, whilst a second and a third wheel are positioned on sides of the two asparagus beds facing away from each other.

The means for lifting, guiding and laying down the foil are located both above the asparagus bed that is present between the first wheel and the second wheel and above the asparagus bed that is present between the first wheel and the third wheel, so that it is possible to remove the foil from two asparagus beds simultaneously. By disposing the first wheel and the respective second and third wheels diametrically with respect to the lifting means, as it were, relatively much space is available on either side of the lifting means for harvesting asparagus from the beds present under said means.

Moreover, since the device is constructed in the form of a three-wheeler, as it were, the manoeuvrability of the device is relatively high, so that the device, upon reaching the end of the asparagus beds, can easily be driven between the asparagus beds lying adjacently thereto.

One embodiment of the device according to the invention is characterised in that the device includes at least two guide arrangements supported by the vehicle, which each comprise two parallel, spaced-apart, rotatable rollers, whereby the two guide arrangements are movable above the two asparagus beds lying adjacently to each other during operation, whilst the rollers extend substantially transversely to the longitudinal direction of the asparagus beds.

With the device according to the invention the foil is held spaced from the asparagus bed between the two spaced-apart rollers. The foil is laid over the two rollers at the beginning of the asparagus bed, and at the rear side of the device it is positioned over the asparagus bed and brought into contact therewith again. By subsequently transporting the device in the longitudinal direction of the asparagus bed, the foil present near the front side of the device is moved upwards, with the rollers rolling over the underside of the foil. The rotatable rollers provide a smooth and gradual guidance of the foil.

By providing the device with two guide arrangements, two asparagus beds lying adjacently to each other can be worked simultaneously.

It is also possible, however, to lift the foil off the asparagus bed by means of a device according to the invention and deposit it on the ground beside the asparagus bed, whereby the foil that has been deposited on the ground is placed on the associated asparagus bed again after some time. During the intervening period the asparagus can be removed from the exposed beds by harvesting personnel.

With one method according to the invention this is done in that a harvesting person removes asparagus from an asparagus bed allotted to him, then steps over the asparagus bed in question to work the same area of an adjacent asparagus bed. The harvesting person thereby moves in a direction transversely to the longitudinal direction of the asparagus beds, as it were, so that there will be practically no loss caused by said person moving along the asparagus beds, which would be the case if the harvesting person were to move in the longitudinal direction of the asparagus beds. In addition, several persons can work one asparagus bed simultaneously in this manner.

The invention will be explained in more detail with reference to the drawings, wherein:
Figure 1 is a front view of a device according to the invention;
Figure 2 is a plan view of the device of Figure 1;
Figure 3 is a side view of the device of Figure 1;
Figure 4 is a top plan view of a second embodiment of a guide arrangement according to the invention;
Figure 5 is a side view of the guide arrangement of Figure 4;
Figure 6 is a cross-sectional view of the guide arrangement of Figure 5, in the direction indicated by arrows VI-VI;
Figure 7 is a cross-sectional view of the guide arrangement of Figure 4, in the direction indicated by arrows VII-VII;
Figure 8 is a front view of a foil receiving device according to the invention;
Figure 9 is a side view of the foil receiving device of Figure 8; and
Figure 10 is a top plan view of asparagus beds being worked.

Parts corresponding to each other are indicated by the same numerals in the figures.

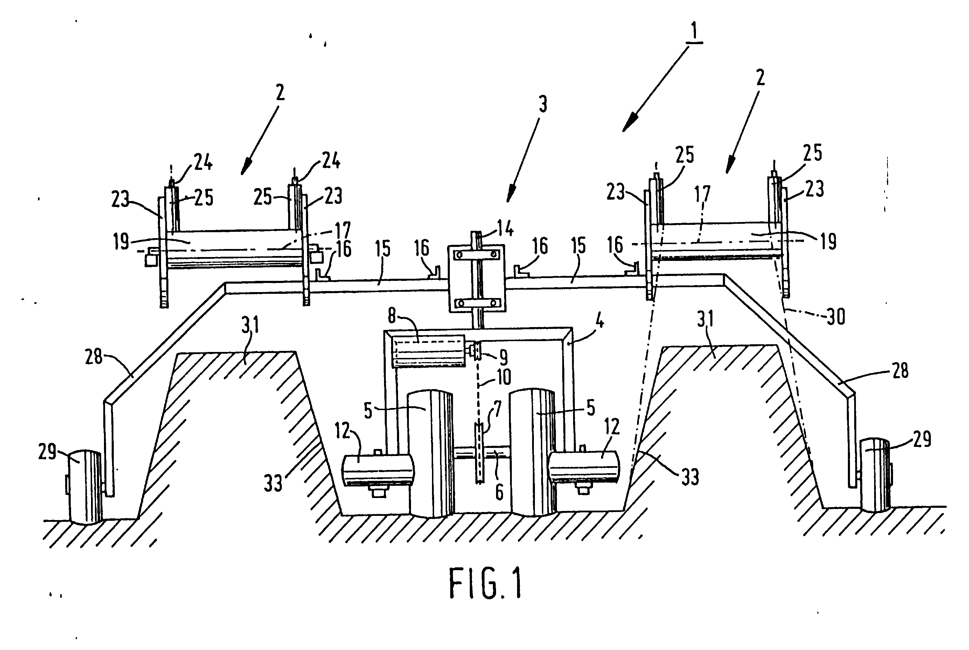

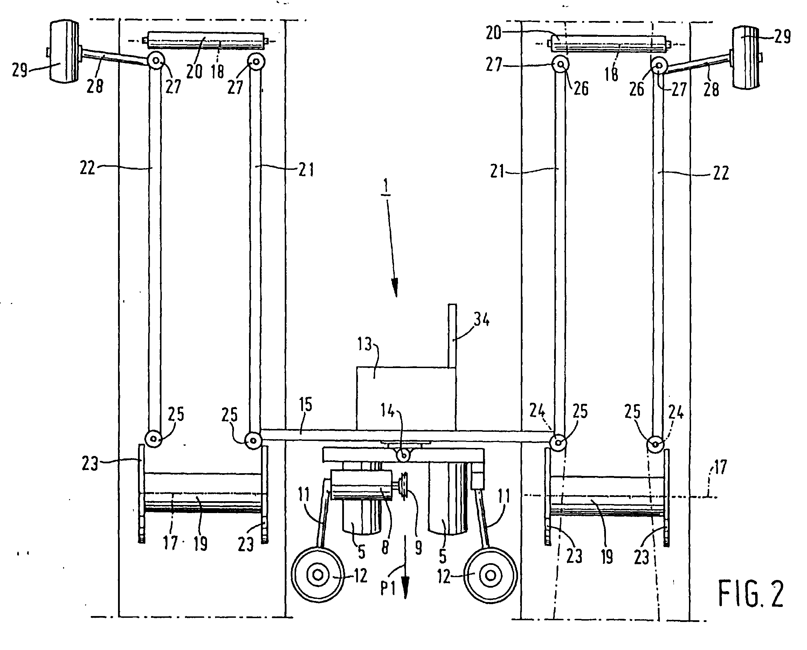

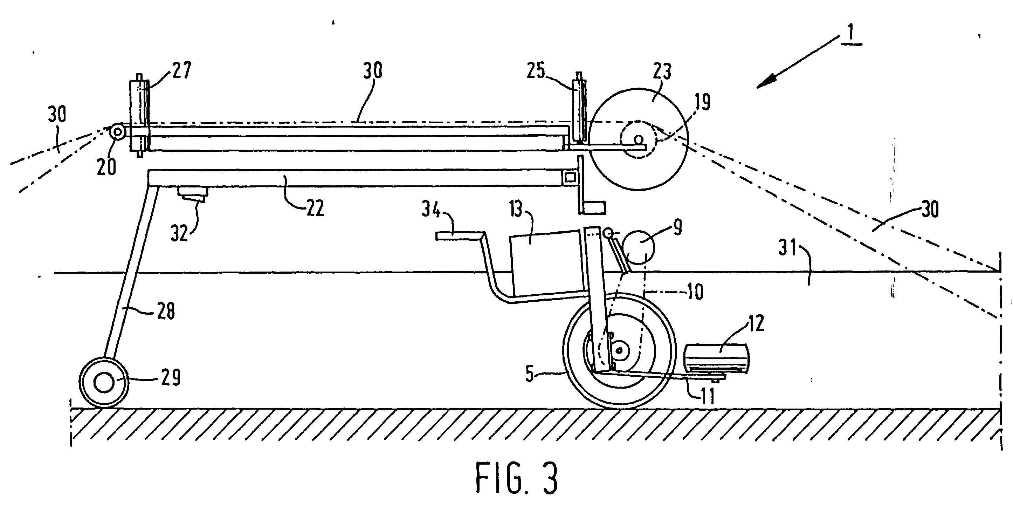

Figures 1, 2 and 3 are a front view, a top plan view and a side view, respectively, of a device 1 according to the invention. Device 1 includes two guide arrangements 2, which are disposed on either side of a vehicle 3. Vehicle 3 includes a frame 4, to which two wheels 5 are connected via bearings. Wheels 5 can be rotated by means of a drive shaft 6, on which a sprocket wheel 7 is mounted, near the centre thereof. Frame 4 supports a motor 8, on an outgoing shaft of which a sprocket wheel 9 is mounted. An endless chain 10 is passed over sprocket wheels 7, 9. Frame 4 furthermore includes two arms 11, which are each fitted with positioning wheels 12 at an end remote from frame 4. Motor 8 is an electric motor, which is fed by a battery 13. Frame 4 is pivotally connected to a cross beam 15 by means of a pin 14. Cross beam 15 is connected to a guide arrangement 2 at each of its ends. Cams 16 are present on cross beam 15, which cams function to position and support collecting trays (not shown) for the asparagus to be harvested.

Each guide arrangement 2 includes two rollers 19, 20, which are rotatable about axes 17, 18. Rollers 19, 20 are held a relatively large distance apart by means of sections 21, 22 extending transversely to the axes 17, 18. Roller 19 is provided at both ends with flanges 23, whose diameter is relatively large in comparison with the diameter of roller 19. Spindles 25 being rotatable about axes 24 are disposed on a side facing towards roller 20, near ends of flanges 23. Similar spindles 27 being rotatable about axes 26 are disposed near ends of roller 20, on a side facing towards roller 19. Furthermore an arm 28 is connected to section 22 near roller 20, on which arm 28 a wheel 29 is mounted at an end remote from frame 22. Wheel 29 is positioned substantially diametrically opposite wheel 5 in comparison with guide arrangement 2.

The operation of device 1 according to the invention is as follows. Vehicle 3 is positioned between two elongated asparagus beds 31 covered with foils 30. Near the beginning of the asparagus beds 31, the foil 30 is manually positioned over rollers 19 and 20, and on a side near roller 20 it is positioned over the asparagus bed again and fixed thereto. Then a switch 32 of vehicle 3 is activated by a person operating device 1, as a result of which motor 8 is started and wheels 5 are driven by means of sprocket wheels 7, 9 and chain 10. This causes vehicle 4 with the guide arrangements 2 mounted thereon to move in the direction indicated by arrow P1. The positioning wheels 12 can thereby come into contact with the long sides 33 of asparagus beds 31, with wheels 12 rolling along long sides 33 and guide vehicle 4 in the desired direction. As vehicle 4 moves in the direction indicated by arrow P1, the roller 19 under the foil 30 present at the front of the device 1 is rotated, causing the foil 30 to be lifted off asparagus bed 31. At the same time foil 30 rolls off roller 20 near the rear side of device 1, whereby the weighted side edges of foil 30 cause said foil 30 to fall back over the asparagus bed again. The part of the asparagus bed 31 from which foil 30 has been removed can be worked while vehicle 4 is moving in forward direction. If desired, switch 32 can be activated in order to bring vehicle 4 to a standstill temporarily. This may be desirable when relatively many asparagus need to be removed from asparagus bed 31, for example. The harvested asparagus can be deposited in the trays supported by cams 16. While guide arrangement 2 is passing under foil 30, foil 30 is held on roller 19 over the entire width by flanges 23. Furthermore, the sides of the foil are guided further by rotatable spindles 25. A similar guidance takes place near roller 20 by means of spindles 27.

In addition, the foil is supported between 119 and 120 by a plate extending between sections 21 and 22. This has the advantage that any condensation and earth adhering to the foil will fall on said plate and not on the person who is working the asparagus bed.

Near the ends of the asparagus beds the wheels 5 can be caused to swivel by means of handle 34, so that vehicle 4 can be moved to a position between two other asparagus beds.

As a result of the three-wheeler-like arrangement of the swivelling wheels 5 and the wheels 29 disposed at some distance therefrom, the device 1 is easily manoeuvrable.

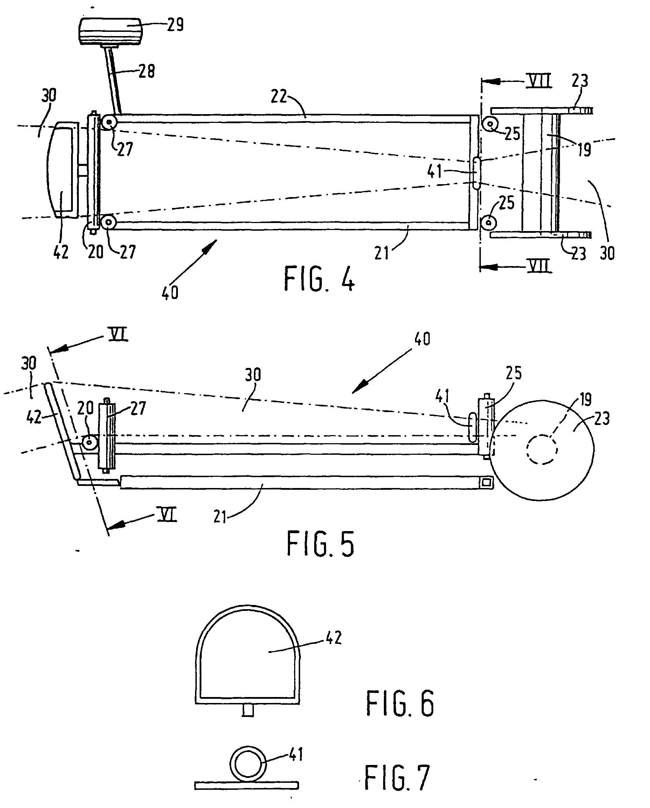

Figures 4 - 7 show another embodiment of a guide arrangement 40 according to the invention. Guide arrangement 40 distinguishes itself from guide arrangement 2 by being provided with a guide ring 41 near spindles 25, through which foil 30 is passed, and with a guide arch 42 near roller 20, on a side remote from roller 19, over which foil 30 is led back to the asparagus bed 31 again. The presence of guide ring 41 and guide arch 42 constitutes a further improvement as regards the guidance of foil 30.

In addition, guide ring 41 and guide arch 42 make it possible to turn over foil 30, so that the underside is caused to face up. The foil is manually guided through ring 41 and over arch 42 in upside-down position at the beginning of the asparagus bed. When device 1 is subsequently moved forward, the foil will be turned over along the full length of the bed. When the foil is turned over, a white side will face up instead of the black side of the foil, for example.

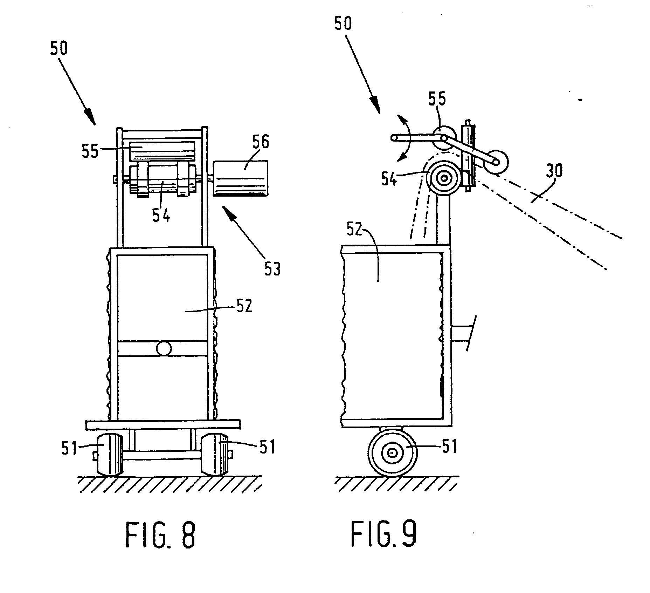

Figures 8 and 9 are a front view and a partial side view, respectively, of a foil receiving device 50 according to the invention, which includes a container 52 supported by wheels 51 and a roll-up mechanism 53 positioned above container 52. Roll-up mechanism 53 includes two opposite rollers 54, 55, with roller 54 being driven by means of a motor 56. Device 50 is hitched to the vehicle 4 the moment when foil 30 must be removed from asparagus bed 31 altogether, for example at the end of the harvesting season. One end of foil 30 is placed between rollers 54 and 55, after which motor 56 is activated. Foil 30 is transported between rollers 54, 55 during the movement of vehicle 4 between asparagus beds 31 and deposited in container 52.

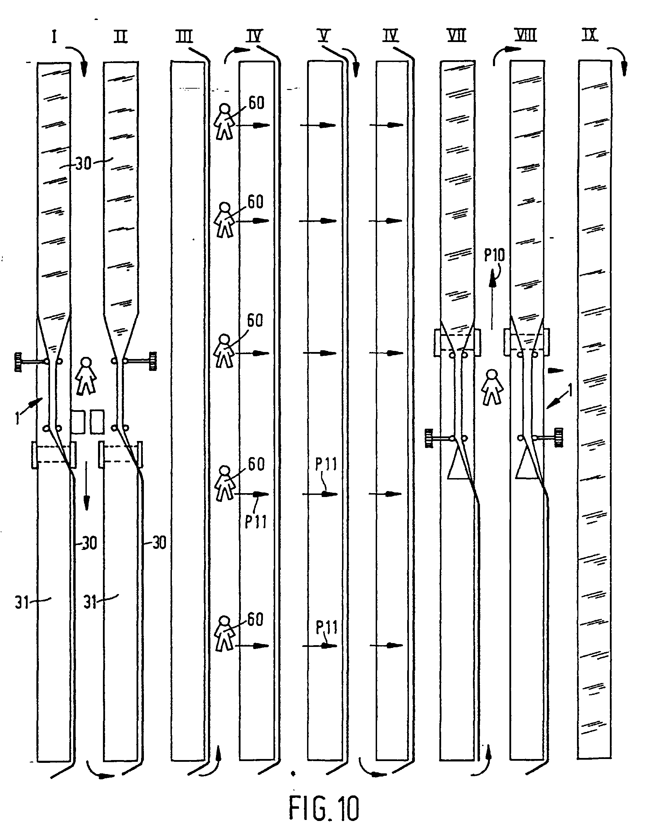

Figure 10 is a top plan view of a number of asparagus beds 31 which may be covered by means of foils 30.

Foil 30 is removed from the asparagus beds 31 by means of a device 1 positioned between asparagus beds VII, VIII, and deposited on the ground beside the asparagus bed 31 in question. The device 1 is to that end moved in the direction indicated by arrow P10. In the example that is shown in Figure 10, the foil 30 has been removed from beds I-VI already and harvesting personnel 60 can remove the asparagus that is present in asparagus beds 31. In the situation which is shown in Figure 10, said persons 60 are present between beds III-VI. Once a person 60 has removed the asparagus from a portion of the asparagus bed IV near him, he will step over asparagus bed 31 to take up position between asparagus beds IV and V, after which he will work the part of the asparagus bed V that is exposed at that location. Persons 60 move over the asparagus beds 31 in the direction of arrow P1, therefore, which direction extends substantially transversely to the direction of movement P10 of device 1 and the longitudinal direction of asparagus beds 31.

After the asparagus beds 31 have been worked, the foil 30 is placed back on the asparagus beds 31 by means of a second device 1.

It is also possible to work the asparagus beds 31 with a single device 1, whereby first a number of asparagus beds are exposed by means of device 1, after which the same device 1 is used to place back foils 30 on the asparagus beds 31 that have been worked.

When the foil 30 is placed back on asparagus beds 31, the asparagus that has been removed from the asparagus beds 31 by persons 60 can be taken along. Thus there is no need for persons 60 to carry the asparagus themselves.

## Claims

1. A device suitable for working foil-covered asparagus beds, which device comprises a motor-driven vehicle supported by at least three wheels as well as means for lifting, guiding and laying down the foil, characterised in that a first wheel is positioned between two asparagus beds lying adjacently to each other during operation, whilst a second and a third wheel are positioned on sides of the two asparagus beds facing away from each other.

2. A device according to claim 1, characterised in that the device includes at least two guide arrangements supported by the vehicle, which each comprise two parallel, spaced-apart, rotatable rollers, whereby the two guide arrangements are movable above the two asparagus beds lying adjacently to each other during operation, whilst the rollers extend substantially transversely to the longitudinal direction of the asparagus beds.

3. A device according to claim 2, characterised in that the first wheel of the vehicle is positioned near first ends of the first rollers, whilst the second and the third wheel of the vehicle are positioned near the second ends of the second rollers remote from said first ends.

4. A device according to any one of the preceding claims, characterised in that at least one of said guide arrangements includes at least one rotatable guide spindle disposed near an end of at least one of said rollers, which guide spindle extends substantially transversely to the direction of movement and to the axes of said rollers.

5. A device according to any one of the preceding claims, characterised in that at least one of said rollers is provided near at least one end with a foil limiting flange extending transversely to the axis of the roller.

6. A device according to any one of the preceding claims, characterised in that the vehicle comprises at least one positioning wheel, which can roll on a long side of the asparagus bed during operation.

7. A device according to any one of the preceding claims, characterised in that at least one of said guide arrangements includes a guide ring near the front side of the device, seen in the direction of movement, through which the foil is guided during operation.

8. A device according to any one of the preceding claims, characterised in that at least one of said guide arrangements includes a guide arch near the rear side, seen in the direction of movement of the vehicle, over which the foil extends during operation.

9. A device according to any one of the preceding claims, characterised in that the device comprises a detachable foil receiving device, which includes a wheel-supported container and a roll-up mechanism disposed above said container.

10. A device according to claim 9, characterised in that said roll-up mechanism includes at least two rollers positioned opposite each other, at least one of which is connected to a motor, wherein the foil can be transported into said container through said rollers during operation.

11. A method suitable for working foil-covered asparagus beds, wherein the foil is removed from an asparagus bed, after which at least one asparagus present in said asparagus bed is removed and the foil is subsequently placed back on the asparagus bed again, characterised in that the asparagus are removed from the asparagus beds by a number of persons working side by side between two asparagus beds, which persons, after having removed asparagus from the asparagus bed, step over the asparagus bed in question towards an asparagus bed from which the foil has been removed already and which has not been worked yet.
